# EUROPÄISCHE PATENTSCHRIFT

(11) **EP 2 214 861 B1**
(45) Veröffentlichungstag und Bekanntmachung des Hinweises auf die Patenterteilung: **31.10.2012**
(21) Anmeldenummer: 07856252.7
(22) Anmeldetag: 24.11.2007
(51) Int. Cl.: B23K 26/16, B23K 26/42, B23K 26/38, B23K 37/04

(54) **VERFAHREN UND VORRICHTUNG ZUR AUFNAHME VON PLATTENFÖRMIGEN MATERIALIEN UND ZUM ENTSORGEN DARAUS ABGETRENNTER TEILE**
METHOD AND APPARATUS FOR HOLDING OF PLATE-SHAPED MATERIALS AND FOR DISPOSAL OF PARTS SEPARATED THEREFROM
PROCÉDÉ ET DISPOSITIF DESTINÉS À LA RÉCEPTION D'UN MATÉRIAU EN FORME DE PLAQUE ET À L'ÉVACUATION DE PARTIES DE CE MATÉRIAU

(43) Veröffentlichungstag der Anmeldung: 11.08.2010
(73) Patentinhaber: TRUMPF Werkzeugmaschinen GmbH + Co. KG, 71254 Ditzingen (DE)
(72) Erfinder: GRAF, Daniel, 71254 Ditzingen (DE)
(74) Vertreter: Maser, Jochen
(86) Internationale Anmeldenummer: PCT/EP2007/010222
(87) Internationale Veröffentlichungsnummer: WO 2009/065429

(56) Entgegenhaltungen:
- EP-A- 0 220 415
- WO-A-2007/028576
- JP-A- 63 063 596
- US-A- 4 758 284

## Beschreibung

Die Erfindung betrifft ein Verfahren und eine Vorrichtung zur Aufnahme von plattenförmigen Materialien und zum Entsorgen daraus abgetrennter Teile durch zumindest einen Trennvorgang im plattenförmigen Material mit einer während des Trennvorganges bewegbaren Schneidstrahleinrichtung einer Bearbeitungsmaschine.

Aus der EP 1 425 142 B1 geht eine Vorrichtung zur Aufnahme von plattenförmigen Materialien zum Trennen mittels einer Trenneinrichtung hervor. Diese Auflagevorrichtung umfasst eine erste und zweite Auflagefläche, die einen gemeinsamen Auflagetisch bilden, wobei die erste und zweite Auflagefläche von einander beabstandet sind und einen Spalt bilden. Diese erste und zweite Auflagefläche sind durch ein Auflageband gebildet, wobei die Begrenzung des Spaltes jeweils durch eine Umlenkeinrichtung vorgesehen ist, entlang der das Auflageband geführt wird. Während eines Schneidvorganges werden die den Spalt bildenden Umlenkeinrichtungen derart verfahren, dass der Schneidstrahl der bewegbaren Schneidstrahleinrichtung, welcher während eines Trennvorganges aus der Unterseite des plattenförmigen Materials austritt, in den Spalt eintreten kann, so dass eine Beschädigung des Auflagebandes verhindert wird. Diese Vorrichtung weist den Nachteil auf, dass der während dem Schneidprozess entstehende Abbrand, Staub und Schlacke nach unten in die Vorrichtung eintritt. Gleichzeitig können Kleinteile durch den Spalt nach unten in einen Innenraum fallen, der durch das umlaufende Auflageband gebildet ist, und verschmutzen. Dadurch kann ein gezieltes Abräumen der geschnittenen Teile aus dem plattenförmigen Material als auch des Schneidabfalls nicht ermöglicht werden. Darüber hinaus ist bei einer solchen Einrichtung nicht die Möglichkeit einer stabilen Auflage des Werkstücks nahe dem Schneidspalt gegeben, um ein sauberes Trennen des plattenförmigen Materials zu ermöglichen.

Aus der WO 2007/028576 A2 geht eine gattungsgemäße Vorrichtung zur Aufnahme eines plattenförmigen Materials für zumindest einen Trennvorgang im plattenförmigen Material mit einer bewegbaren Schneideinrichtung hervor, bei welcher eine erste und zweite durch ein Auflageband gebildete Auflagefläche vorgesehen ist, welche einen gemeinsamen Auflagetisch zur Aufnahme des plattenförmigen Materials bildet. Zwischen der ersten und zweiten Auflagefläche ist eine Strahlfangvorrichtung angeordnet, welche entlang des Auflagebandes hin und her verfahrbar ist. Das Auflageband wird über Umlenkeinrichtungen, die der Strahlfangvorrichtung zugeordnet sind, umgelenkt und unterhalb der Stahlfangvorrichtung entlang beziehungsweise hindurch geführt. Die Strahlfangvorrichtung weist ein Gehäuse mit einer Öffnung auf, welche geringfügig breiter als der aus der Unterseite des plattenförmigen Materials austretende Schneidstrahl ist. Dadurch kann der während des Trennvorganges entstehende Staub, Abbrand und/oder die Schlacke in dem Gehäuse aufgenommen werden. Durch die schmal ausgebildete Öffnung des Gehäuses wird ein Verkippen der geschnittenen Teile als auch ein unkontrolliertes Abräumen über die Strahlfangvorrichtung verhindert.

Zur Erhöhung der Bearbeitungsgeschwindigkeiten und der Prozesssicherheit ist es jedoch erforderlich, dass ein Ausschleusen sowohl von Kleinteilen als auch Abfallteilen in definierter Weise erforderlich ist, damit die Kollisionsgefahr durch ein Verkippen und die Gefahr einer Verhakung von kleinen Teilen an einer Eintrittskante der Öffnung der Strahlfangvorrichtung durch die Verfahrbewegung der Strahlfangvorrichtung verhindert wird.

Der Erfindung liegt deshalb die Aufgabe zugrunde, ein Verfahren und eine Vorrichtung zur Aufnahme von plattenförmigen Materialien und zur Entsorgung von Teilen, die durch den Trennvorgang aus dem plattenförmigen Material abgetrennt sind, vorzuschlagen, das beziehungsweise die eine gezielte Entsorgung von kleinen Teilen ermöglicht und die Prozesssicherheit erhöht.

Diese Aufgabe wird erfindungsgemäß durch ein Verfahren gemäß den Merkmalen des Anspruchs 1 gelöst. Bei dem erfindungsgemäßen Verfahren wird ermöglicht, dass durch einen ein- oder beidseitig benachbart zur Strahlfangvorrichtung angeordneten Entsorgungsspalt zumindest Abfallteile, die beim Herstellen von Kleinteilen beziehungsweise Gutteilen aus dem plattenförmigen Material entstehen, entsorgt werden. Dadurch kann die Gefahr minimiert werden, dass zumindest die Abfallteile sich an einer Eintrittskante der Öffnung der Strahlfangvorrichtung verhaken. Dabei ist vorgesehen, dass eine Spaltbreite des Entsorgungsspaltes gewählt wird, bei der die Kleinteile nicht durch den Entsorgungsspalt fallen, jedoch die Abfallteile über den Entsorgungsspalt entsorgt werden. Sofern die herzustellenden Kleinteile gleich oder kleiner der Spaltbreite des Entsorgungsspaltes sind, werden diese Kleinteile ebenfalls über den Entsorgungsspalt abgeführt, so dass die ausgeschnittenen Teile, die gleich oder kleiner als die Breite des Entsorgungsspaltes sind, nach dem Trennvorgang im plattenförmigen Material gezielt von dem Auflagetisch abgeführt werden. Dadurch wird die Prozesssicherheit bei einer flächigen Werkstückauflage erhöht. Durch die Trennung der Entsorgung von Kleinteilen und Abfallteilen einerseits und Schlacke, Staub und/oder Abbrand durch die Strahlfangvorrichtung andererseits werden über den Entsorgungsspalt die Kleinteile ohne Verschmutzung durch Schlacke, Staub und/oder Abbrand aus dem Arbeitsbereich der Bearbeitungsmaschine herausgeführt.

Nach einer bevorzugten Ausführungsform des Verfahrens ist vorgesehen, dass Abfallteile, deren Länge in oder gegen die Verfahrrichtung der Strahlfangvorrichtung gleich oder größer als die Spaltbreite des Entsorgungsspaltes sind, durch eine Schneidstrategie mit der Schneidstrahleinrichtung zur Entsorgung durch den Entsorgungsspalt verkleinert werden. Dadurch wird die Gefahr der Verhakung durch die ausgeschnittenen Abfallteile an einer Eintrittskante der Öffnung der Strahlfangvorrichtung erheblich minimiert. Somit kann eine gezielte Entsorgung über den Entsorgungsspalt ermöglicht werden. Ab einer bestimmten Größe der Abfallteile ist eine Zerkleinerung und Entsorgung der Abfallteile über den Entsorgungsspalt nicht mehr nötig, da solche Abfallteile wie die Kleinteile sicher über die Öffnung der Strahlfangvorrichtung und den Entsorgungsspalt hinweggeführt werden können.

Nach einer bevorzugten Ausgestaltung des Verfahrens ist vorgesehen, dass die Spaltbreite des Entsorgungsspaltes größer als eine Öffnungsbreite der Strahlfangvorrichtung und kleiner als die Länge von ausgeschnittenen Kleinteilen in oder gegen die Verfahrrichtung der Strahlfangvorrichtung ausgebildet wird. Dadurch kann ein gezieltes Entsorgen der beim Trennvorgang aus dem plattenförmigen Material entstehenden Abfallstücke erfolgen und die Kleinteile auf dem Auflageband verbleiben.

Nach einer weiteren vorteilhaften Ausgestaltung des Verfahrens ist vorgesehen, dass durch die Schneidstrategie zur Zerkleinerung der Abfallstücke eine Teilegröße geschnitten wird, die größer als die Öffnung des Gehäuses der Strahlfangvorrichtung und kleiner als die Spaltbreite des Entsorgungsspaltes ist. Dadurch kann eine gezielte und sichere Abführung der Abfallstücke erzielt werden.

Nach einer vorteilhaften Ausgestaltung des Verfahrens ist vorgesehen, dass die Schneidstrategie bei Abfallteilen durchgeführt wird, die eine Länge in oder gegen die Verfahrrichtung der Strahlfangvorrichtung bis zur fünffachen Größe der Breite des Entsorgungsspaltes aufweisen. Solche Abfallteile werden zerkleinert, um die Gefahr der Verhakung zu minimieren. Abfallteile mit einer größeren Länge können nach dem Trennvorgang auf dem Auflagetisch verbleiben, da diese Teile sicher über die Eintrittskante der Öffnung der Strahlfangvorrichtung hinweggeführt werden können.

Die Aufgabe wird erfindungsgemäß durch eine Vorrichtung gemäß den Merkmalen des Anspruchs 5 gelöst. Durch die Anordnung von zumindest einem Entsorgungsspalt benachbart zur Strahlfangvorrichtung können aus dem plattenförmigen Material herausgeschnittene Teile, die Kleinteile beziehungsweise Gutteile und/oder Abfallteile umfassen, durch den zumindest einen Entsorgungsspalt aus der Auflagefläche des Auflagetisches gezielt entfernt werden, um ein Verhaken der geschnittenen Teile mit einer Eintrittskante einer Öffnung der Strahlfangvorrichtung zu vermeiden. Dadurch wird die Prozesssicherheit erhöht. Gleichzeitig kann auch eine Verkürzung der Bearbeitungszeiten durch eine erhöhte Verfahrgeschwindigkeit der Schneidstrahlvorrichtung erzielt werden. Bevorzugt sollen durch den Entsorgungsspalt nur Abfallteile entsorgt werden. Durch diese Vorrichtung gemäß den Merkmalen des Anspruchs 6 ist insbesondere die Durchführung des Verfahrens der Ansprüche 1 bis 5 ermöglicht.

Nach einer weiteren bevorzugten Ausgestaltung der Vorrichtung ist vorgesehen, dass der zumindest eine Entsorgungsspalt zwischen der Strahlfangvorrichtung und der benachbart angeordneten Umlenkeinrichtung vorgesehen ist. Diese Anordnung weist des Weiteren den Vorteil auf, dass unmittelbar benachbart zur Strahlfangvorrichtung nach dem vollständigen Ausschneiden von Teilen eine umgehende und gezielte Abführung ermöglicht ist. Darüber hinaus kann durch die unmittelbar benachbarte Anordnung des zumindest einen Entsorgungsspaltes einer Entsorgungseinrichtung zur Strahlfangvorrichtung eine kompakte Anordnung geschaffen werden, welche zwischen der ersten und zweiten Auflagefläche verfahrbar ist.

Nach einer weiteren bevorzugten Ausgestaltung der Erfindung ist vorgesehen, dass eine linienförmige Strahlfangvorrichtung mit einer linienförmigen Öffnung vorgesehen ist und der ein- oder beidseitig benachbarte Entsorgungsspalt sich parallel zur Öffnung des Gehäuses der Strahlfangvorrichtung zumindest abschnittsweise erstreckt. Dadurch wird ein schmaler Aufbau mit der ein- oder beidseitig benachbarten Entsorgungseinrichtung ermöglicht, so dass die Unterbrechung zwischen der ersten und zweiten Auflagefläche zur Aufnahme des plattenförmigen Materials gering gehalten ist. Bevorzugt ist der Entsorgungsspalt gleich lang oder sogar länger als die Öffnung des Gehäuses der Strahlfangvorrichtung ausgebildet, so das eine Entsorgung über die gesamte Arbeitsbreite der Schneidstrahleinrichtung sichergestellt ist.

Die Spaltbreite des Entsorgungsspaltes ist bevorzugt auf eine Größe der abzuführenden Teile einstellbar. Diese Spaltbreite des Entsorgungsspalts berücksichtigt eine Belegung der herzustellenden Teile aus dem plattenförmigen Material, so dass entweder eine Spaltbreite gewählt wird, bei der die Kleinteile nicht entsorgt werden oder die Entsorgung von Kleinteilen - also Gutteilen - bis zu einer vorbestimmten Größe ebenfalls ermöglicht oder sichergestellt ist. Die Abfallteile, welche um ein bestimmtes Maß größer als die Spaltbreite des Entsorgungsspaltes sind, werden durch eine Schneidstrategie zerkleinert, so dass diese über den Entsorgungsspalt gezielt abgeführt werden können. Die Entsorgung der Kleinteile über den Entsorgungsspalt und einer dazu angeordneten Entsorgungseinrichtung ist unproblematisch, da die Entsorgungseinrichtung getrennt zur Strahlfangvorrichtung vorgesehen ist. Dadurch wird der bei dem Trennvorgang entstehende Staub, der Abbrand und/oder die Schlacke durch die Strahlfangvorrichtung aufgenommen, so dass in der Entsorgungseinrichtung ausschließlich die Kleinteile und die Abfallteile ohne eine zusätzliche Verschmutzung aufgenommen werden. Somit ist eine Beeinträchtigung in der Qualität der geschnittenen Teile für die weitere Verwendung nicht gegeben.

Dem Entsorgungsspalt zugewandt ist bevorzugt an die Öffnung der Strahlfangvorrichtung angrenzend ein leistenförmiges Element oder eine Fläche vorgesehen, welches in die Auflageebene des Auflagetisches aufklappbar ist. Dadurch kann der Entsorgungsspalt vollständig geschlossen werden. Beispielsweise bei einer beidseitigen Anordnung des Entsorgungsspaltes kann von Vorteil sein, dass einer der beiden Entsorgungsspalte, vorzugsweise der in der Verfahrrichtung der Strahlfangvorrichtung vorauseilende Entsorgungsspalt, geschlossen ist und über den nacheilenden Entsorgungsspalt die Teileentsorgung erfolgt. Darüber hinaus kann während einer Verfahrbewegung der Strahlfangvorrichtung der Entsorgungsspalt wahlweise geschlossen und geöffnet werden. Hierzu ist bevorzugt eine Ansteuerung für das leistenförmige Element vorgesehen. Dadurch können Bereiche des plattenförmigen Materials mit ausgeschnittenen Teilen problemlos über den Entsorgungsspalt hinweggeführt oder gezielt entsorgt werden.

Nach einer bevorzugten Ausgestaltung des leistenförmigen Elementes ist vorgesehen, dass dieses leistenförmige Element oder die Fläche aus einer Vielzahl von Einzelsegmenten ausgebildet ist. Dadurch kann die Länge des Entsorgungsspaltes variiert werden. Insbesondere kann ein Bereich unmittelbar benachbart zum Schneidstrahl geöffnet und der übrige Entsorgungsspalt geschlossen werden.

Zur Erhöhung der Prozesssicherheit gegen Verkippen ist bevorzugt in einem Bereich zwischen der Umlenkeinrichtung und der Strahlfangvorrichtung zumindest ein Stützelement vorgesehen, welches die durch die Umlenkeinrichtung begrenzte Auflagefläche in Richtung auf die Strahlfangvorrichtung verlängert. Die Stützelemente weisen eine Abstützfläche auf, welche in der Ebene der Stirnfläche der Strahlfangvorrichtung als auch in der Ebene der Auflagefläche liegt. Diese Abstützfläche der Stützelemente ist durch eine Ausnehmung unterbrochen, welche den Entsorgungsspalt bildet. Diese Ausnehmung bildet eine Vertiefung gegenüber der Stützfläche, so dass in den Entsorgungsspalt fallende Abfallteile oder Kleinteile aus der Ebene des Werkstücks bzw. plattenförmigen Materials nach unten abgeführt werden können.

Nach einer bevorzugten Ausgestaltung der Erfindung ist vorgesehen, dass die Länge der Ausnehmung entlang der Abstützfläche die Breite des Entsorgungsspaltes bestimmt. Bei dieser Ausführungsform der Stützelemente ist eine feste Breite des Entsorgungsspaltes vorgesehen. Alternativ kann auch die Ausnehmung variabel gestaltet werden, so dass eine individuelle Anpassung in der Spaltbreite für das jeweilige Stützelement ermöglicht ist. Des Weiteren kann alternativ vorgesehen sein, dass Stützelemente mit einer festen Entsorgungsspaltbreite in verschiedenen Größen für die Entsorgungsspaltbreiten vorgesehen sind, die anwendungsspezifisch eingesetzt werden.

Des Weiteren ist bevorzugt vorgesehen, dass mehrere im Abstand zueinander angeordnete Stützelemente an die Strahlfangvorrichtung angrenzen und die Ausnehmungen der Stützelemente in Y-Richtung einen Kanal mit einem Entsorgungsspalt bilden, wobei zumindest die Abfallteile zwischen den benachbarten Stützelementen zur Entsorgungseinrichtung abführbar sind. Die Anzahl der einzelnen Stützelemente, welche entlang einer Strahlfangvorrichtung vorgesehen sind, kann beliebig ausgewählt werden. Der Abstand zwischen den Stützelementen kann anwendungsspezifisch ausgewählt werden, wobei sowohl gleiche als auch ungleiche Abstände zwischen einzelnen einander gegenüberliegenden Stützelementen vorgesehen sein können. Beim Einsatz eines Bürstensegmentbandes als Auflageband, welches mehrere Reihen von Bürstenbündeln umfasst, ist bevorzugt zwischen jeder Reihe der Bürstenbündel ein Stützelement vorgesehen.

Diese Stützelemente sind bevorzugt an einer Gehäusewand der Strahlfangvorrichtung austauschbar befestigt. Dadurch können in Abhängigkeit der Ausbildung der Spaltbreite entsprechend daran angepasste Stützelemente einfach montiert werden.

Unterhalb des Entsorgungsspaltes ist eine Entsorgungseinrichtung zur Aufnahme der durch den Entsorgungsspalt hindurch fallenden Teile vorgesehen. Diese Entsorgungseinrichtung ist getrennt von der Strahlfangvorrichtung angeordnet, so dass eine saubere Trennung von Schlacke, Staub und Abbrand einerseits und der zu entsorgenden Teile andererseits ermöglicht ist. Diese Entsorgungseinrichtung kann beispielsweise durch ein Förderband ausgebildet werden, um die ausgeschnittenen Teile abzuführen. Des Weiteren können mechanische Fördersysteme, wie beispielsweise eine Förderschnecke, eine Rüttelrinne, eine Luftleitrinne, Rollen oder dergleichen, vorgesehen sein. Ebenfalls kann die Entsorgungseinrichtung als ausziehbare Schublade oder als ein auf einem Boden hin und her bewegbarer Schieber ausgebildet sein, um die Kleinteile aus der Entsorgungseinrichtung herauszuführen. Des Weiteren kann auch eine Absaugung vorgesehen sein.

Nach einer weiteren bevorzugten Ausgestaltung der Erfindung ist vorgesehen, dass dem Entsorgungsspalt ein wannenförmiges Gehäuse zugeordnet ist, dessen seitliche Wandabschnitte sich zumindest abschnittsweise in Richtung zur Auflagefläche erstrecken. Ein-seitlicher Wandabschnitt ist bevorzugt unmittelbar an dem Gehäuse der Strahlfangvorrichtung vorgesehen. Der gegenüberliegende Wandabschnitt erstreckt sich vorzugsweise nahe oder bis zur Auflagefläche, so dass im Zusammenwirken mit den Stützelementen ein Zwickel zwischen der Umlenkeinrichtung und den seitlichen Wandabschnitten überbrückt wird. Am Boden des wannenförmigen Gehäuses ist bevorzugt die Entsorgungseinrichtung angeordnet.

Nach einer weiteren bevorzugten Ausgestaltung der Erfindung ist vorgesehen, dass die Öffnung der Strahlfangvorrichtung durch eine Auflageleiste ausgebildet ist, deren Breite auf die einzustellende Spaltbreite des Entsorgungsspaltes anpassbar ist. Dadurch kann nicht nur die Breite des Entsorgungsspaltes bestimmt werden, sondern gleichzeitig auch eine Auflagefläche zwischen der Eintrittskante der Öffnung der Strahlfangvorrichtung und der Eintrittskante des Entsorgungsspaltes, so dass im Bereich des Trennschnittes ein sicheres Aufliegen der Teile und eine hohe Qualität der Schneidkanten durch ein vorzeitiges Verkippen verhindert wird. Diese Auflageleiste ist bevorzugt austauschbar an dem Gehäuse der Strahlfangvorrichtung vorgesehen.

Nach einer bevorzugten Ausführungsform der Erfindung ist vorgesehen, dass ein Befestigungselement zumindest ein Auflageelement aufnimmt, dessen Oberfläche bündig zur Stirnfläche der Auflageleiste vorgesehen ist und eine zweite Eintrittskante des Entsorgungsspaltes bildet. Dieses Auflageelement kann austauschbar von dem Befestigungselement aufgenommen werden. Dadurch können unterschiedliche Geometrien des Entsorgungsspaltes einfach geschaffen werden. Darüber hinaus kann durch Austausch der Auflageelemente auch eine unterschiedliche Breite des Entsorgungsspaltes erzielt werden.

Nach einer vorteilhaften Ausgestaltung eines solchen Auflageelementes ist vorgesehen, dass dieses zumindest zweiteilig und in der Größe seiner Auflagefläche einstellbar ausgebildet ist. Dadurch kann eine schnelle und einfache Veränderung der Entsorgungsspaltbreite beim Einrichten der Bearbeitungsmaschine erzielt werden.

Nach einer weiteren alternativen Ausgestaltung der Erfindung ist vorgesehen, dass die Öffnung der Strahlfangvorrichtung durch dünnwandige Leisten ausgebildet ist. Bei dieser Ausführungsform ist die Stirnfläche des Gehäuses, welche in der Ebene des Auflagetisches liegt, auf ein Minimum reduziert. Dadurch wird unmittelbar nach dem Trennen der Teile ein Abführen in den benachbart an die Strahlfangvorrichtung angrenzenden Entsorgungsspalt sichergestellt.

Die zur Öffnung der Strahlfangvorrichtung eingesetzten Leisten sind bevorzugt dachförmig einander zugeordnet, so dass unabhängig der Bewegungsrichtung der Strahlfangvorrichtung im gleichen Maße eine Entsorgung sichergestellt ist.

Nach einer weiteren vorteilhaften Ausgestaltung der Erfindung ist an dem Gehäuse der Strahlfangvorrichtung eine Verschlusseinrichtung mit einzelnen Schieberelementen vorgesehen, die in einer Ruhelage den Entsorgungsspalt schließen und zum Öffnen des Entsorgungsspaltes einzeln oder zumindest teilweise gemeinsam ansteuerbar sind. Dadurch kann der Entsorgungsspalt bedarfsweise geöffnet oder geschlossen werden, wodurch zusätzlich eine Minimierung der Verhakungsgefahr der geschnittenen und im plattenförmigen Material verbleibenden Teile gegeben ist.

Nach einer weiteren bevorzugten Ausgestaltung der Erfindung ist vorgesehen, dass die Länge des Entsorgungsspaltes zumindest teilweise durch ein oder zwei bandförmige Verschlusselemente geschlossen ist. Bei einem einteiligen bandförmigen Verschlusselement kann beispielsweise eine feste Öffnungsbreite vorgesehen sein, welche entlang des Entsorgungsspaltes zum Entsorgen der Teile hin und her bewegbar ist, wobei die benachbarten Bereiche geschlossen sind. Bevorzugt ist ein solches Verschlusselement als umlaufendes Band ausgebildet. Alternativ können zwei voneinander getrennte bandförmige Verschlusselemente vorgesehen sein, wobei die beiden Verschlusselemente unabhängig voneinander bewegbar sind, so dass deren freien Enden sowohl die Lage als auch die Länge des Öffnungsspaltes bestimmen.

Nach einer weiteren alternativen Ausgestaltung der Erfindung ist in dem Entsorgungsspalt eine Absaugvorrichtung vorgesehen, um die ausgeschnittenen Teile zwangsweise in den Entsorgungsspalt überzuführen oder die Einbringung zu unterstützen.

Des Weiteren kann vorteilhafterweise vorgesehen sein, dass dem Entsorgungsspalt eine Blasvorrichtung zugeordnet ist, um das Einführen der Kleinteile in den Entsorgungsspalt zu unterstützen.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigen:
- Figur 1: eine perspektivische Ansicht einer erfindungsgemä-βen Bearbeitungsmaschine,
- Figur 2: eine schematisch vergrößerte Ansicht einer Strahlfangvorrichtung und benachbarten Entsorgungseinrichtungen der Bearbeitungsmaschine gemäß Figur 1,
- Figur 3: eine schematisch vergrößerte Ansicht eines Stützelementes,
- Figur 4: eine schematisch vergrößerte Ansicht einer Strahlfangvorrichtung mit einer alternativen Ausführungsform von benachbarten Entsorgungseinrichtungen gemäß Figur 1 und
- Figur 5: eine schematische Ansicht einer alternativen Ausführungsform zu Figur 2.

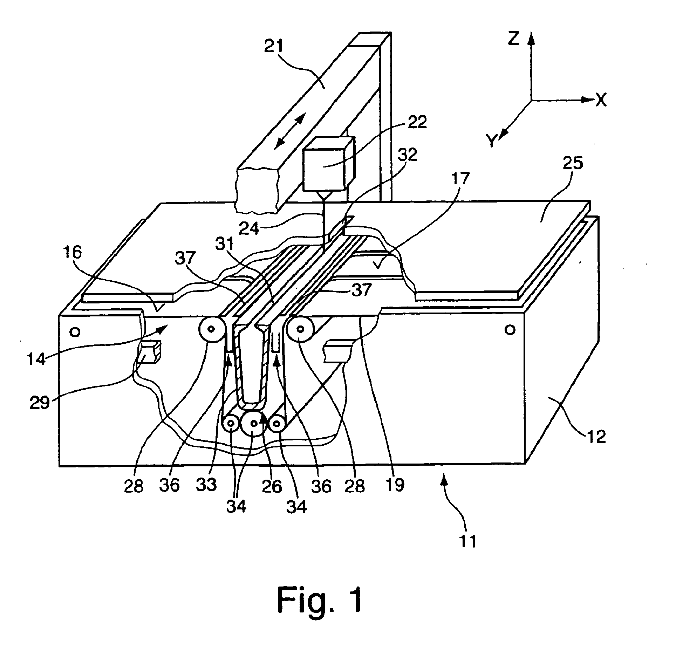

In Figur 1 ist perspektivisch eine Bearbeitungsmaschine 11 dargestellt. Diese Bearbeitungsmaschine 11 ist bevorzugt als Laserschneidmaschine ausgebildet. Alternativ kann auch eine Plasmaschneidmaschine oder Brennstrahlschneidmaschine ausgebildet sein. Ein Maschinenbett 12 umfasst eine erste und zweite Auflagefläche 16, 17, die gemeinsam einen Auflagetisch 14 bilden. Die Auflageflächen 16, 17 können beispielsweise durch ein gemeinsames Auflageband 19 ausgebildet sein, welches ruhend im Maschinenbett 12 gehalten ist. Alternativ kann dieses Auflageband 19 auch bewegbar angetrieben sein und zusätzlich eine Transportfunktion übernehmen. Des Weiteren kann für jede Auflagefläche 16, 17 ein separates Auflageband 19 vorgesehen sein.

Das Auflageband 19 kann vielfältig ausgestaltet werden, wobei insbesondere temperaturbeständige Materialien eingesetzt werden. Beispielsweise kann das Auflageband 19 als ein durchgehend bahnförmiges Material ausgebildet sein. Des Weiteren können mehrere Streifenelemente zur Bildung eines Bürstensegmentbandes vorgesehen sein, die aneinander gereiht ein Auflageband zur Ausbildung der Auflagefläche 16, 17 ergeben. Des Weiteren können als Auflageband 19 nicht nur bandförmige Materialien aus Gewebe oder dergleichen eingesetzt werden, sondern auch Bürsten, Bürstenleisten oder einzelne Tragelemente, die aneinandergereiht sind, um eine Auflagefläche 16, 17 für ein plattenförmiges Material 25 zu bilden. Weitere Ausgestaltungen des Auflagebandes sind ebenfalls denkbar und können ihren Einsatz finden.

Über eine Linearachse 21 ist ein Schneidkopf 22 in Y-Richtung bewegbar und bildet einen Arbeitsbereich des Schneidkopfes 22. Zusätzlich kann eine Linearachse vorgesehen sein, die in und entgegen einer X-Richtung verfahrbar ist. Darüber hinaus kann auch eine in der Höhe verfahrbare Linearachse vorgesehen sein. Von dem Schneidkopf 22 aus wird ein Schneidstrahl 24 auf das plattenförmige Material 25 gerichtet, welches auf dem Auflagetisch 14 aufliegt, um eine Bearbeitung durchzuführen.

Auf einer Unterseite des plattenförmigen Materials 25 ist im Bearbeitungsbereich des Schneidkopfes 22 eine Strahlfangvorrichtung 26 vorgesehen, die zwischen Umlenkeinrichtungen 28 positioniert ist, welche jeweils die Auflagefläche 16, 17 begrenzen. Die Strahlfangvorrichtung 26 kann beispielsweise entlang einer Führung 29 in und entgegen der X-Richtung verfahrbar sein, wobei die Strahlfangvorrichtung 26 an die Bewegung des Schneidkopfes 22 gekoppelt ist, beispielsweise durch einen eigenen Antrieb oder ohne Eigenantrieb mitgeführt wird.

Die Strahlfangvorrichtung 26 weist eine Öffnung 31 auf, die zum Schneidkopf 22 gerichtet ist und sich bevorzugt entlang des gesamten Bearbeitungsbereiches des Schneidkopfes 22 in Y-Richtung erstreckt. Während der Bearbeitung des plattenförmigen Materials 25 kann der Schneidstrahl 24, der an der Unterseite des plattenförmigen Materials 25 nach Einbringung eines Schneidspaltes 32 austritt, durch die Öffnung 31 von einem Gehäuse 33 der Strahlfangvorrichtung 26 aufgefangen werden.

Bei der in Figur 1 dargestellten Ausführungsform ist das Auflageband 19 einteilig ausgebildet und wird an den Umlenkeinrichtungen 28 nach unten umgelenkt sowie über eine oder mehrere Umlenkeinrichtungen 34 unterhalb der Strahlfangvorrichtung 26 entlang geführt. Alternativ kann für jede Auflagefläche 16, 17 ein separates Auflageband 19 vorgesehen sein, das ein oder mehrteilig ausgebildet ist. Dabei können die jeweiligen Umlenkeinrichtungen, die zum Aufspannen der Auflagefläche 16, 17 dienen, jeweils einzeln und auch unabhängig voneinander verfahrbar sein.

Benachbart zur Strahlfangvorrichtung 26 ist ein Entsorgungsspalt 37 vorgesehen, welchem eine Entsorgungseinrichtung 36 zugeordnet ist. Dieser Entsorgungsspalt 37 ist bevorzugt zwischen einer Strahlfangvorrichtung 26 und einer Umlenkeinrichtung 28 vorgesehen. Dieser Entsorgungsspalt 37 kann ein- oder beidseitig der Strahlfangvorrichtung 26 vorgesehen sein.

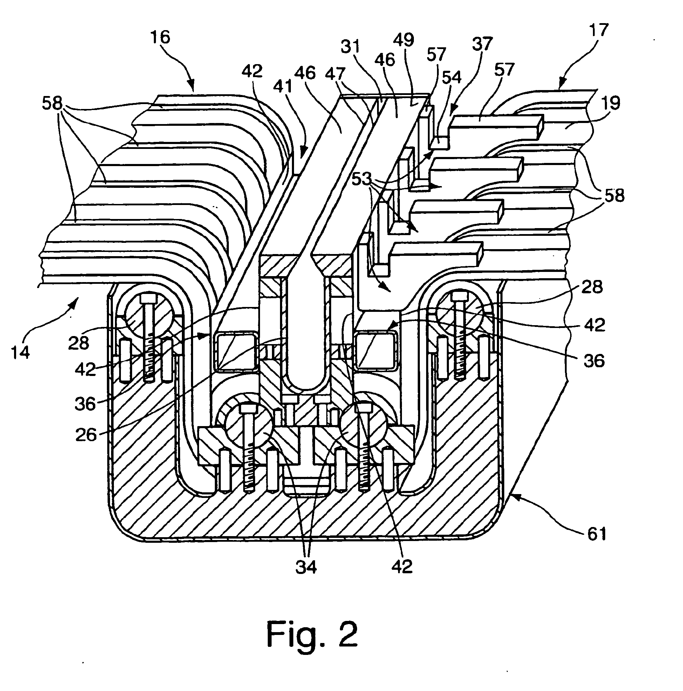

In Figur 2 ist eine schematisch vergrößerte Seitenansicht einer Strahlfangvorrichtung 26 mit beispielsweise beidseitig dazu angeordneten Entsorgungsspalten 37 und Entsorgungseinrichtungen 36 dargestellt, wobei nur einseitig der Entsorgungsspalt 37 dargestellt ist. Die Entsorgungseinrichtung 36 bildet zusammen mit seitlichen sich zur Auflagefläche 16, 17 erstreckenden Wandabschnitten 42 ein wannenförmiges Gehäuse 41. Das wannenförmige Gehäuse 41 ist mit einem Wandabschnitt 42 unmittelbar dem Gehäuse 33 der Strahlfangvorrichtung 26 zugeordnet.

Die Entsorgungseinrichtung 36 ist gemäß diesem Ausführungsbeispiel als umlaufendes Transportband 38 ausgebildet, welche die Abfall- oder Kleinteile in der Y-Richtung aus dem Maschinenbett 12 herausführt.

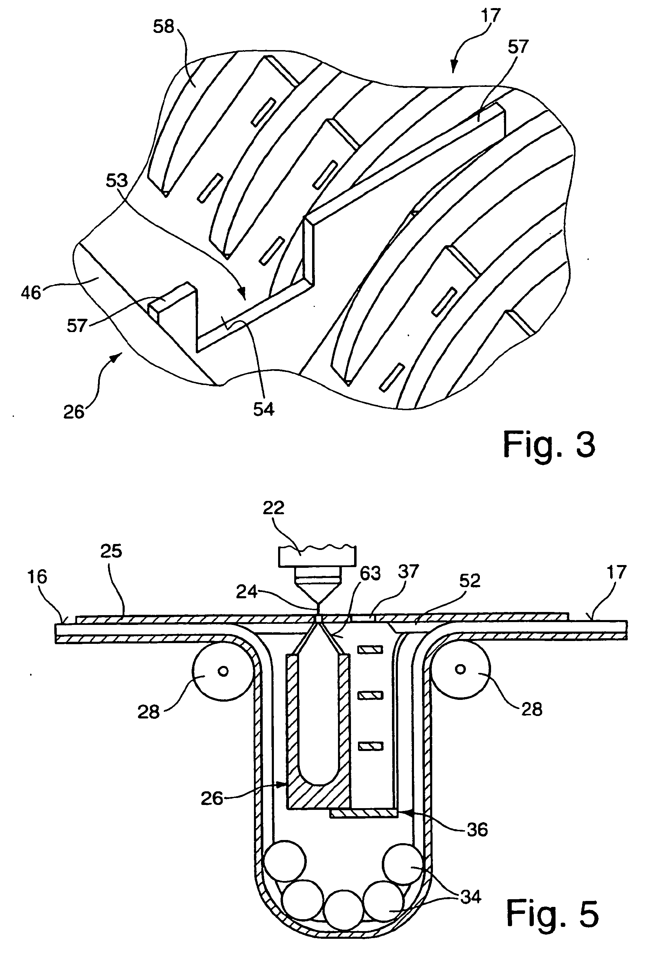

Der Entsorgungsspalt 37 wird bei der Ausführungsform gemäß Figur 2 durch eine Vielzahl von nebeneinander angeordneten Stützelementen 53 gebildet, welche sich zwischen der Strahlfangvorrichtung 26 bzw. einem Wandabschnitt 42 und der Umlenkeinrichtung 28 erstrecken. Das Stützelement 53 ist in diesen Zwischenraum oder Bereich einsetzbar. Eine schematisch vergrößerte Darstellung des Stützelementes 53 ist in Figur 3 dargestellt. Das Stützelement 53 umfasst eine an die Kontur der Umlenkeinrichtung 28 angepasste Geometrie zur Abstützung daran. Stirnseitig ist am Stützelement 53 eine Abstützfläche 57 vorgesehen, welche in der Ebene der Auflagefläche 16, 17 liegt und bündig zur Stirnseite einer Auflagefläche 49 an der Strahlfangvorrichtung 26 angrenzt. Diese Abstützfläche 57 ist durch eine Ausnehmung 54 unterbrochen, welche sich in Richtung auf die Entsorgungseinrichtung 36 erstreckt. Die Breite der Ausnehmung 54 entspricht der Breite des Entsorgungsspaltes 37. Bei einer Nebeneinanderreihung von mehreren Stützelementen 53, wie dies in Figur 2 dargestellt ist, ergeben die Ausnehmungen 54 einen Entsorgungsspalt 37, an den die Abstützflächen 57 angrenzen.

Die Ausnehmung 54 ist nur beispielhaft U-förmig ausgebildet. Diese kann bevorzugt eine gerundete, eine halbkreisförmige, ein V-förmige oder eine elliptische Kontur aufweisen.

Das Stützelement 53 ist gemäß Figur 3 zwischen zwei Reihen von Bürstenbündeln eines Bürstensegmentbandes positioniert, wobei das Bürstensegmentband mehrere in Y-Richtung ausgerichtete Bürstenleisten umfasst, die durch in X-Richtung verlaufende Verbindungselemente zueinander positioniert sind. Die Bürstenleisten umfassen mehrere im Abstand zueinander angeordnete Bürstenbündel, wobei die Darstellung in Figur 3 vereinfacht ausgeführt ist und die einzelnen hintereinander angeordneten Bürstenbündel jeder Bürstenleiste als durchgehende Erhöhung 58 dargestellt sind. Die Stirnseite der Erhöhung 58 bildet die Auflageebene der Auflagefläche 16, 17.

Die Öffnung 31 der Strahlfangvorrichtung 26 gemäß Figur 2 ist durch jeweils eine Auflageleiste 46 ausgebildet, die jeweils aufeinander zugerichtete Eintrittskanten 47 ausbilden und die Öffnungsbreite der Öffnung 31festlegen. Die Öffnungsbreite der Öffnung 31 ist auf die Größe des Schneidstrahles 24 angepasst.

Der Abstand des Entsorgungsspaltes 37 zur Öffnung 31 kann zum einen durch die Breite der Auflageleiste 46 und insbesondere durch eine an die Auflagefläche 49 der Auflageleiste 46 angrenzende Abstützfläche des Stützelementes 53 bestimmt werden.

Beim Verfahren der Strahlfangvorrichtung 26 und gleichzeitigem parallelem Bewegen der Entsorgungseinrichtung 36 bzw. des Entsorgungsspaltes 37 fallen Abfallteile oder Kleinteile über den Entsorgungsspalt 37 in den durch die Ausnehmungen 54 gebildeten und in Y-Richtung sich erstreckenden Kanal und gelangen anschließend über einen Freiraum zwischen den zueinander beabstandeten Stützelementen 53 zur Entsorgungseinrichtung 36. Über die seitlichen Wandabschnitte 42 des wannenförmigen Gehäuses 41 wird sichergestellt, dass die Teile nicht mit dem umlaufenden Auflageband 19 kollidieren und sicher über die Entsorgungseinrichtung 36 abgeführt werden können.

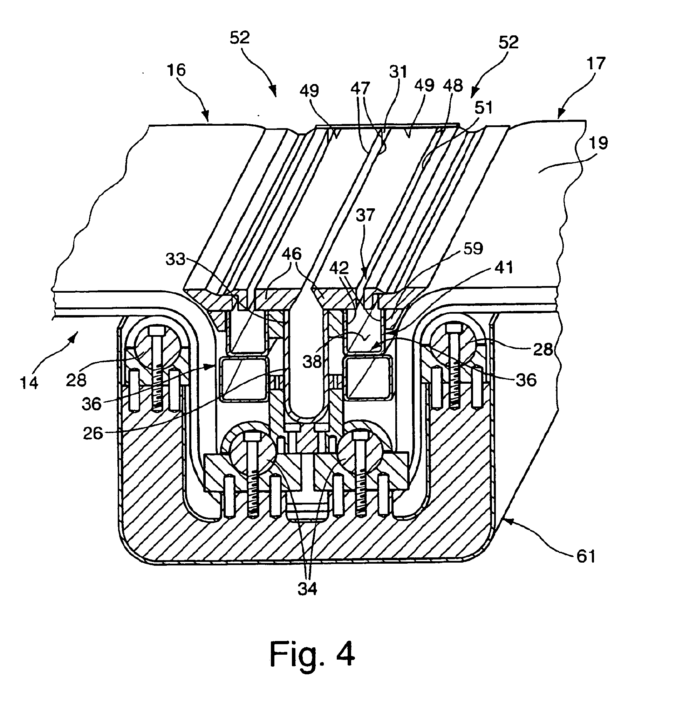

In Figur 4 ist eine alternative Ausführungsform zu Figur 2 dargestellt. Bei dieser Ausführungsform ist zur Bildung und Einstellung einer Spaltbreite des Entsorgungsspaltes 37 eine Auflageleiste 46 vorgesehen, welche auf dem Gehäuse 33 der Strahlfangvorrichtung 26 aufliegt und eine Eintrittskante 47 der Öffnung 31 bildet. Dieser Eintrittskante 47 gegenüberliegend und zur Entsorgungseinrichtung 36 sich erstreckend weist die Auflageleiste 46 eine weitere Eintrittskante 48 auf. Dazwischen liegend ist eine Auflagefläche 49 gebildet, deren Breite durch den Abstand der Eintrittskanten 47, 48 gebildet ist. Des Weiteren wird der Entsorgungsspalt 37 durch eine der Eintrittskante 48 gegenüberliegende Eintrittskante 51 gebildet, welche Teil eines Auflageelementes 52 ist, das sich bis zur Auflagefläche 16, 17 erstreckt. Dadurch wird ein zwischen der Auflagefläche 16 und der Eintrittskante 51 des Entsorgungsspaltes 37 gebildeter Zwickel aufgrund der Umlenkeinrichtung 28 überbrückt. Dieses Auflageelement 52 wird bevorzugt durch ein Befestigungselement 59 getragen. Dieses Befestigungselement 59 kann an dem wannenförmigen Gehäuse 41, der Entsorgungseinrichtung 36 und/oder der Strahlfangvorrichtung 26 befestigt sein.

Die Breite des Entsorgungsspaltes 37 der Entsorgungseinrichtung 36 kann somit durch die Breite des Auflageelementes 52 und die Breite der Auflageleiste 46 bestimmt werden. Die Breite der Auflageleiste 46 umfasst vorteilhafterweise wenigstens die Länge des kleinsten Kleinteiles, so dass beim Trennvorgang ein vorzeitiges Abkippen des Teils verhindert wird. Das in Figur 4 dargestellte Auflageelement 52 ist beispielhaft zweiteilig ausgebildet, wodurch eine variable Einstellung der Breite des Entsorgungsspaltes 37 ermöglicht ist. Die Oberseite des Auflageelementes 52 weist im Verschiebebereich eine muldenförmige Vertiefung auf, um eine Verhakung der darüber hinweg zu führenden Teile zu vermeiden. Bei dieser in Figur 4 dargestellten Ausführungsform ist das Auflageband 19 bevorzugt aus einem bandförmigen Material vorgesehen.

Die Entsorgungseinrichtung 36 weist am Boden des wannenförmigen Gehäuses 41 beispielsweise ein Förderband 38 auf, um durch den Entsorgungsspalt 37 hindurch fallende Teile aus dem Gehäuse 41 abzutransportieren. Der Abtransport der Teile kann in bestimmten Positionen der Strahlfangvorrichtung innerhalb des Maschinenbettes 12 vorgesehen sein, um die Teile abzuführen. Ebenso kann ein kontinuierliches Abtransportieren vorgesehen sein.Die Entsorgungseinrichtung 36 ist bevorzugt thermisch isoliert zur Strahlfangvorrichtung 26 angeordnet, so dass eine Aufwärmung der Teile in dem Gehäuse minimiert ist.

Bei der in Figur 2 dargestellten Ausführungsform ist bevorzugt eine Verfahreinheit 61 vorgesehen, an welcher die Umlenkeinrichtungen 28 und 34 positioniert und gleichzeitig die Strahlfangvorrichtung 26 und die Entsorgungseinrichtung 36 getragen sind. Entlang eines umlaufenden Spaltes wird das Auflageband 19 unterhalb der Strahlfangvorrichtung 26 und der Entsorgungseinrichtung 36 durchgeführt. Diese Anordnung ermöglicht eine kompakte Ausgestaltung.

In Figur 5 ist eine alternative Ausführungsform zu Figur 2 dargestellt. Bei dieser Ausführungsform ist beispielsweise nur einseitig ein Entsorgungsspalt 37 der Strahlfangvorrichtung 26 zugeordnet. Bei dieser Ausführungsform weicht die Geometrie der Auflageleiste 46 des Gehäuses 33 vom Ausführungsbeispiel in Figur 2 ab. Die Auflageleisten 46 sind als schmal ausgebildete Auflagefläche 49 ausgebildet, welche dachförmig angeodnet sind. Dadurch bildet sich eine sehr schmale Auflagefläche 49 aus, an welcher unmittelbar daran angrenzend Schrägflächen 63 vorgesehen sind, die ein Herabgleiten der Teile in den Entsorgungsspalt 37 begünstigen. An der Auflagefläche 16 ist ein Auflageelemente 52 angeordnet, das sich unmittelbar bis zur Auflagefläche 49 der Strahlfangvorrichtung 26 erstreckt. Gegenüberliegend ist an der Auflagefläche 17 ein Auflageelement 52 vorgesehen, welches sich lediglich soweit in Richtung zur Strahlfangvorrichtung 26 erstreckt, damit dieses beispielsweise bündig am Wandabschnitt 42 des wannenförmiges Gehäuses 41 anliegt. Dadurch ist ein Entsorgungsspalt 37 zwischen einer Auflagefläche 49 und dem Auflageelement 52 gebildet.

Die Ausführungsformen gemäß den Figuren 2 und 4 weisen beide den Vorteil auf, dass der aus einer Unterseite des Werkstücks austretende Schneidstrahl 24 getrennt von der Entsorgung von Teilen in der Strahlfangvorrichtung 26 aufgefangen und absorbiert wird. Zusätzlich wird die Schlacke, der Staub und/oder der Abbrand in die Strahlfangvorrichtung eingetragen, so dass eine saubere Entsorgung der Teile über den Entsorgungsspalt vorgesehen ist. Somit können auch Teile, wie beispielsweise Kleinteile, die für eine weitere Verwendung bestimmt sind, über den Entsorgungsspalt abgeführt werden, ohne dass eine Beeinträchtigung der Qualität gegeben ist.

Zum Einbringen der Teile in den Entsorgungsspalt 37 kann des Weiteren im wannenförmigen Gehäuse 41 oder daran angrenzend eine Absaugeinrichtung vorgesehen sein. Des Weiteren kann oberhalb des Entsorgungsspaltes 37 eine Blasvorrichtung vorgesehen sein, um das Einbringen durch einen Blasdruck von oben zu unterstützen. Ergänzend kann die Entsorgungseinrichtung 36 mit Vibrationen beaufschlagt werden, um ein Einfallen von Teilen in den Entsorgungsspalt 37 zu fördern.

Damit das Fallen und die Aufnahme der Kleinteile durch die Entsorgungseinrichtung kontrollierbar ist, kann bevorzugt eine Sensorik vorgesehen sein, wie beispielsweise eine Lichtschranke, so dass die durch den Entsorgungsspalt 37 fallenden Teile erfassbar sind.

## Patentansprüche

1. Verfahren zur Aufnahme von plattenförmigen Materialien und zum Entsorgen von Teilen des plattenförmigen Materials, die durch einen Trennvorgang mit einer Schneidstrahleinrichtung einer Bearbeitungsmaschine (11) geschnitten und von dem plattenförmigen Material (25) abgetrennt werden,
- bei dem während des Schneidvorganges eine Strahlfangvorrichtung (26) zum Scheidstrahl (24) der Schneidstrahleinrichtung positioniert wird, damit ein aus der Unterseite des plattenförmigen Materials (25) austretender Schneidstrahl (24) in eine Öffnung (31) des Gehäuses (33) der Strahlfangvorrichtung (26) eintritt,
- wobei die Strahlfangvorrichtung (26) zwischen einer ersten und zweiten Auflagefläche (16, 17), die einen Auflagetisch (14) bilden, verfahrbar angeordnet ist,
**dadurch gekennzeichnet, dass**
- ein ein- oder beidseitig benachbart zur Strahlfangvorrichtung (26) angeordneter Entsorgungsspalt (37) einer Entsorgungseinrichtung (36) mit der Strahlfangvorrichtung (26) verfahren wird und
- dass die Spaltbreite des Entsorgungsspaltes (37) größer als eine Öffnungsbreite der Öffnung (31) der Strahlfangvorrichtung (26) ausgebildet wird.

2. Verfahren nach Anspruch 1, **dadurch gekennzeichnet, dass** Abfallteile, deren Länge in oder gegen die Verfahrrichtung der Strahlfangvorrichtung (26) gleich oder größer als die Spaltbreite des Entsorgungsspaltes (37) sind, durch eine Schneidstrategie mit der Schneidstrahleinrichtung zur Entsorgung über den Entsorgungsspalt (37) zerkleinert werden.

3. Verfahren nach Anspruch 1, **dadurch gekennzeichnet, dass** die Spaltbreite des Entsorgungsspaltes (37) größer als die Öffnungsbereite der Öffnung (31) der Strahlfangvorrichtung (26) und kleiner als die Länge von ausgeschnittenen Kleinteilen in oder gegen die Verfahrrichtung der Strahlfangvorrichtung (26) ausgebildet wird.

4. Verfahren nach Anspruch 2, **dadurch gekennzeichnet, dass** durch die Schneidstrategie zum Zørkleinern der Abfallteile eine Teilegröße der Abfallteile zugeschnitten wird, die größer als die Öffnung (31) der Strahlfangvorrichtung (26) und kleiner als die Spaltbreite des Entsorgungsspaltes (37) ist und vorzugsweise die Schneidstrategie bei Abfallteilen durchgeführt wird, die eine Länge in oder gegen die Verfahrrichtung der Strahlfangvorrichtung (26) bis zur fünffachen Größe der Breite des Entsorgungsspaltes (37) aufweisen.

5. Vorrichtung zur Aufnahme von plattenförmigen Materialien (25) für zumindest einen Trennvorgang im plattenförmigen Material (25) mit einer während des Trennvorganges bewegbaren Schneldstrahleinrichtung einer Bearbeitungsmaschine (11) und zur Entsorgung von Teilen, die durch den Trennvorgang aus dem plattenförmigen Material (25) abgetrennt sind, insbesondere zur durchführung des Verfahrens gemäß einem der Ansprüche 1 bis 4,
- mit einer ersten und einer zweiten durch zumindest ein Auflageband (19) gebildeten Auflagefläche (16, 17), die gemeinsam einen Auflagetisch (14) zur Aufnahme des plattenförmigen Materials (25) bilden,
- mit einer Strahlfangvorrichtung (26), welche eine zum Schneidstrahl (24) weisende Öffnung (31) aufweist, so dass der Schneidstrahl (24), der beim Trennvorgang des plattenförmigen Materials (25) aus der Unterseite austritt, durch die Öffnung (31) in einen Strahlauffangraum eines Gehäuses (33) der Strahlfangvorrichtung (26) eintritt und welche zwischen der ersten und zweiten Auflagefläche (16, 17) angeordnet ist,
- wobei die erste und zweite, an die Strahlfangvorrichtung (26) angrenzende Auflagefläche (16, 17) durch Umlenkeinrichtungen (28) begrenzt sind, die der Strahlfangvorrichtung (26) zugeordnet sind,
**dadurch gekennzeichnet, dass**
- ein- oder beidseitig zur Strahlfangvorrichtung (26) benachbart ein Entsorgungsspalt (37) einer Entsorgungseinrichtung (36) für aus dem plattenförmigen Material (25) herausgetrennte Teile vorgesehen ist, und
- dass die Spaltbreite des Entsorgungsspaltes (37) größer als eine Öffnungsbreite der Öffnung (31) der Strahlfangvorrichtung (26) ausgebildet wird.

6. Vorrichtung nach Anspruch 5, **dadurch gekennzeichnet, dass** der Entsorgungsspalt (37) zwischen der Strahlfangvorrichtung (26) und der benachbarten Umlenkeinrichtung (28) vorgesehen ist.

7. Vorrichtung nach Anspruch 5, **dadurch gekennzeichnet, dass** eine mit einer linienförmigen Öffnung (31) ausgebildete Strahlfangvorrichtung (26) vorgesehen ist und der zumindest ein Entsorgungsspalt (37) sich parallel zur Öffnung (31) der Strahlfangvorrichtung (26) zumindest abschnittsweise erstreckt und vorzugsweise die Spaltbreite des Entsorgungsspaltes (37) auf die Größe der abzuführenden Teile einstellbar ist.

8. Vorrichtung nach Anspruch 5, **dadurch gekennzeichnet, dass** dem Entsorgungsspalt (37) zugewandt an die Öffnung (31) der Strahlfangvorrichtung (26) angrenzend ein leistenförmiges Element oder eine Fläche vorgesehen ist, welches in die Ebene der Auflagefläche (16, 17) aufklappbar ist und vorzugsweise das leistenförmige Element oder die Fläche aus mehreren Einzelsegmenten ausgebildet ist und die Einzelsegmente vorzugsweise einzeln ansteuerbar sind.

9. Vorrichtung nach Anspruch 5, **dadurch gekennzeichnet, dass** an der Strahlfangvorrichtung (26) angreifend und zur benachbarten Umlenkeinrichtung (28) zumindest ein sich erstreckendes Stützelement (53) vorgesehen ist, welches die an die Strahlfangvorrichtung (26) angrenzenden und durch die Umlenkeinrichtung (28) begrenzten Auflageflächen (16, 17) in Richtung auf die Strahlfangvorrichtung (26) durch eine Abstützfläche (57) überbrückt, die durch eine Ausnehmung (54) unterbrochen ist und vorzugsweise die Länge der Ausnehmung (54) entlang der Abstützfläche (57) die Breite des Entsorgungsspaltes (37) bestimmt und insbesondere mehrere im Abstand zueinander angeordnete Stützelemente (53) an die Strahlfangvorrichtung (26) angrenzen und die Ausnehmungen (54) der Stützelemente (53) einen Kanal bilden, wobei zumindest die Abfallteile zwischen den benachbarten Stützelementen (53) zur Entsorgungseinrichtung (36) abführbar sind, wobei bevorzugt die Stützelemente (53) an einer Gehäusewand der Strahlfangvorrichtung (26) austauschbar befestigt sind.

10. Vorrichtung nach Anspruch 5, **dadurch gekennzeichnet, dass** unterhalb des Entsorgungsspaltes (37) die Entsorgungseinrichtung (36) zur Aufnahme der durch den Entsorgungsspalt (37) hindurch fallenden Teile vorgesehen ist, welche vorzugsweise ein wannenförmiges Gehäuse (41) umfasst, dessen seitliche Wandabschnitte (42) sich zumindest abschnittsweise in Richtung zur Auflagefläche (16, 17) erstrecken.

11. Vorrichtung nach Anspruch 5, **dadurch gekennzeichnet, dass** eine die Öffnung (31) der Strahlfangvorrichtung (26) begrenzende Auflageleiste (46) eine den Entsorgungsspalt (37) bildende Eintrittskante (48) aufweist und vorzugsweise die Spaltbreite des Entsorgungsspaltes (37) zumindest durch die Breite der Auflageleiste (46) einstellbar ist.

12. Vorrichtung nach Anspruch 5, **dadurch gekennzeichnet, dass** ein Befestigungselement (59) zumindest ein Auflageelement (52) aufnimmt, dessen Oberfläche bündig zur Stirnfläche (49) der Auftragsleiste (46) vorgesehen ist und eine zweite Eintrittskante (51) des Eintrittsspaltes (37) bildet und vorzugsweise das Auflageelement (52) zumindest zweiteilig und in der Größe seiner Auflagefläche einstellbar ausgebildet ist.

13. Vorrichtung nach Anspruch 5, **dadurch gekennzeichnet, dass** die Breite der Öffnung (31) der Strahlfangvorrichtung (26) durch Leisten aus einem dünnwandigen Material ausgebildet sind und vorzugsweise diese Leisten dachförmig unter Ausbildung der Öffnung (31) am Gehäuse (33) der Strahlfangvorrichtung (26) angeordnet sind und dessen seitlichen Schrägflächen ein Fallen der Teile in den Entsorgungsspalt (37) unterstützen.

14. Vorrichtung nach Anspruch 5, **dadurch gekennzeichnet, dass** an dem Gehäuse (33) der Strahlfängvorrichtung (26) eine Verschlusseinrichtung mit einzelnen Schieberelementen vorgesehen ist, die in einer Ruhelage den Entsorgungsspalt (37) schließen und zum Öffnen des Entsorgungsspaltes einzeln oder zumindest teilweise gemeinsam ansteuerbar sind und vorzugsweise die Länge des Entsorgungsspaltes (37) zumindest teilweise durch zumindest ein bandförmiges Verschlusselement geschlossen ist.

15. Vorrichtung nach Anspruch 5, **dadurch gekennzeichnet, dass** die Entsorgungseinrichtung (36) eine Absaugeinrichtung umfasst, welche vorzugsweise Teile in das wannenförmige Gehäuse (41) ansaugt und/oder dass oberhalb des Entsorgungsspaltes (37) eine Blasvorrichtung vorgesehen ist.

## Claims

1. Method for supporting plate-shaped materials and for disposing of parts of the plate-shaped material that are cut by a separating process using a cutting beam device of a machine tool (11) and are separated from the plate-shaped material (25),
- in which a beam capturing device (26) is positioned toward the cutting beam (24) of the cutting beam device during the cutting process, so a cutting beam (24) emerging from the underside of the plate-shaped material (25) enters an opening (31) in the housing (33) of the beam capturing device (26),
- the beam capturing device (26) being arranged movably between first and second support surfaces (16, 17), which form a supporting table (14),
**characterised in that**
- a disposal gap (37), arranged on one or both sides beside the beam capturing device (26), of a disposal means (36) is moved with the beam capturing device (26), and
- **in that** the gap width of the disposal gap (37) is greater than an opening width of the opening (31) in the beam capturing device (26).

2. Method according to claim 1, **characterised in that** waste parts, the length of which in or against the direction of movement of the beam capturing device (26) is equal to or greater than the gap width of the disposal gap (37), are reduced in size by a cutting strategy using the cutting beam device for disposal via the disposal gap (37).

3. Method according to claim 1, **characterised in that** the gap width of the disposal gap (37) is greater than the opening width of the opening (31) in the beam capturing device (26) and is smaller than the length of cut small parts in or against the direction of movement of the beam capturing device (26).

4. Method according to claim 2, **characterised in that** the waste parts are cut to a part size via the cutting strategy for reducing the size of the waste parts, this part size being greater than the opening (31) in the beam capturing device (26) and smaller than the gap width of the disposal gap (37) and preferably the cutting strategy is carried out with waste parts that are of a length, in or against the direction of movement of the beam capturing device (26), up to five times the width of the disposal gap (37).

5. Device for supporting plate-shaped materials (25) for carrying out at least one separating process in the plate-shaped material (25) using a cutting beam device, which is movable during the separating process, of a machine tool (11) and for disposing of parts that are separated from the plate-shaped material (25) by the separating process, in particular for carrying out the method according to any one of claims 1 to 4,
- comprising first and second support surfaces (16, 17) formed by at least one support belt (19) and which together form a supporting table (14) for supporting the plate-shaped material (25),
- comprising a beam capturing device (26), which comprises an opening (31) facing the cutting beam (24) in such way that the cutting beam (24), which emerges from the underside during the cutting process of the plate-shaped material (25), enters through the opening (31) into a beam capture area of a housing (33) of the beam capturing device (26) arranged between the first and second support surfaces (16, 17),
- the first and second support surfaces (16, 17) abutting the beam capturing device (26) being defined by return means (28) associated with the beam capturing device (26),
**characterised in that**
- a disposal gap (37), arranged on one or both sides beside the beam capturing device (26), of a disposal means (36) is provided for parts separated from the plate-shaped material (25), and
- **in that** the gap width of the disposal gap (37) is greater than an opening width of the opening (31) in the beam capturing device (26).

6. Device according to claim 5, **characterised in that** the disposal gap (37) is provided between the beam capturing device (26) and the adjacent return means (28).

7. Device according to claim 5, **characterised in that** a beam capturing device (26) with a linear opening (31) is provided and the at least one disposal gap (37) extends parallel to the opening (31) in the beam capturing device (26), at least over portions and preferably the gap width of the disposal gap (37) is set to the size of the parts to be removed.

8. Device according to claim 5, **characterised in that** a strip-shaped member or surface is provided facing the disposal gap (37) adjacent to the opening (31) in the beam capturing device (26) which is openable into the plane of the support surface (16, 17) and preferably the strip-shaped member or surface is formed of a plurality of individual segments and the individual segments are preferably controlled individually.

9. Device according to claim 5, **characterised in that** at least one supporting member (53) engaging with the beam capturing device (26) and extending toward the adjacent return means (28) is provided, which supporting member bridges the support surfaces (16, 17), abutting the beam capturing device (26) and defined by the return means (28), in the direction of the beam capturing device (26) by a supporting face (57), which is interrupted by a recess (54) and preferably the length of the recess (54) along the supporting face (57) determines the width of the disposal gap (37) and in particular a plurality of supporting members (53), arranged at a distance from one another, abut the beam capturing device (26) and the recesses (54) in the supporting members (53) form a channel, at least the waste parts being removable between the adjacent supporting members (53) toward the disposal means (36), whereby preferably the supporting members (53) are removably fixed to a housing wall of the beam capturing device (26).

10. Device according to claim 5, **characterised in that** the disposal means (36) is provided beneath the disposal gap (37) in order to receive the parts falling through the disposal gap (37), which preferably comprise a trough-shaped housing (41), of which the side wall portions (42) extend, at least over portions, in the direction of the support surface (16, 17).

11. Device according to claim 5, **characterised in that** a support strip (46) defining the opening (31) in the beam capturing device (26) comprises a leading edge (48) forming the disposal gap (37) and the gap width of the disposal gap (37) is preferably adjustable at least by the width of the support strip (46).

12. Device according to claim 5, **characterised in that** a fixing member (59) receives at least one support member (52), the surface of which is provided flush with the end face (49) of the support strip (46) and forms a second leading edge (51) of the entry gap (37) and preferably the support member (52) is formed in at least two parts and the size of the support surface thereof is adjustable.

13. Device according to claim 5, **characterised in that** the width of the opening (31) in the beam capturing device (26) is formed by strips made of a thin-walled material and preferably these strips are arranged in a roof-like manner with the formation of the opening (31) at the housing (33) of the beam capturing device (26) and the side sloped surfaces of said housing help the parts to fall into the disposal gap (37).

14. Device according to claim 5, **characterised in that** a closure means having individual slider members is provided at the housing (33) of the beam capturing device (26), which slider members close the disposal gap (37) in an idle position and can be controlled individually or together, at least in part, in order to open the disposal gap and preferably the length of the disposal gap (37) is closed, at least in part, by at least one belt-like closure member.

15. Device according to claim 5, **characterised in that** the disposal means (36) comprises a suction means, which preferably sucks parts into the trough-shaped housing (41) and/or that a blowing device is provided above the disposal gap (37).

## Revendications

1. Procédé destiné à recevoir des matériaux en forme de plaque et à évacuer des parties du matériau en forme de plaque qui sont coupées lors d'un processus de séparation avec un dispositif à jet de coupe d'une machine d'usinage (11) et séparées du matériau (25) en forme de plaque,
- lors duquel un dispositif de capture de jet (26) est positionné, pendant le processus de coupe, par rapport au jet de coupe (24) du dispositif à jet de coupe afin qu'un jet de coupe (24) sortant de la face inférieure du matériau (25) en forme de plaque pénètre dans une ouverture (31) du carter (33) du dispositif de capture de jet (26),
- le dispositif de capture de jet (26) étant disposé de manière à pouvoir se déplacer entre une première et une deuxième surface d'appui (16, 17) qui forment une table porte-pièce (14),
**caractérisé en ce que**
- une fente d'évacuation (37) d'un dispositif d'évacuation (36) disposée de manière contiguë au dispositif de capture de jet (26), d'un seul côté ou des deux côtés de celui-ci, est déplacée avec le dispositif de capture de jet (26), et
- la largeur de fente de la fente d'évacuation (37) est formée de manière à être supérieure à une largeur d'ouverture de l'ouverture (31) du dispositif de capture de jet (26).

2. Procédé selon la revendication 1, **caractérisé en ce que** les parties restantes dont la longueur est, dans le sens de déplacement du dispositif de capture de jet (26) ou dans le sens contraire de celui-ci, égale ou supérieure à la largeur de fente de la fente d'évacuation (37) sont coupées, grâce à une stratégie de coupe, en morceaux plus petits avec le dispositif à jet de coupe en vue de leur évacuation par la fente d'évacuation (37).

3. Procédé selon la revendication 1, **caractérisé en ce que** la largeur de fente de la fente d'évacuation (37) est formée de manière à être supérieure à la largeur d'ouverture de l'ouverture (31) du dispositif de capture de jet (26) et inférieure à la longueur de parties de matériau découpées de petite taille, et ce dans le sens de déplacement du dispositif de capture de jet (26) ou dans le sens contraire de celui-ci.

4. Procédé selon la revendication 2, **caractérisé en ce que**, grâce à la stratégie de coupe permettant de réduire la taille des parties restantes, on obtient des parties restantes dont la taille est supérieure à l'ouverture (31) du dispositif de capture de jet (26) et inférieure à la largeur de
fente de la fente d'évacuation (37), et **en ce que** la stratégie de coupe est de préférence réalisée dans le cas de parties restantes qui présentent, dans le sens de déplacement du dispositif de capture de coupe (26) ou dans le sens contraire de celui-ci, une longueur jusqu'à cinq fois supérieure à la largeur de la fente d'évacuation (37).

5. Dispositif destiné à recevoir des matériaux (25) en forme de plaque en vue d'au moins un processus de séparation dans le matériau (25) en forme de plaque avec un dispositif à jet de coupe d'une machine d'usinage (11), lequel peut se déplacer pendant le processus de séparation; et destiné à évacuer des parties de matériau qui sont séparées du matériau (25) en forme de plaque lors du processus de séparation; notamment destiné à réaliser le procédé selon une quelconque des revendications 1 à 4,
- avec une première et une deuxième surface d'appui (16, 17) formées par au moins un tapis porte-pièce (19), lesquelles forment ensemble une table porte-pièce (14) destinée à recevoir le matériau (25) en forme de plaque,
- avec un dispositif de capture de jet (26) qui présente une ouverture (31) orientée vers le jet de coupe (24) de sorte que le jet de coupe (24) qui lors du processus de séparation du matériau (25) en forme de plaque sort de la face inférieure de celui-ci, pénètre par l'ouverture (31), qui est disposée entre la première et la deuxième surface d'appui (16, 17), dans un espace de capture de jet d'un carter (33) du dispositif de capture de jet (26),
- la première et la deuxième surface d'appui (16, 17) contiguës au dispositif de capture de jet (26) étant limitées par des dispositifs de déviation (28) qui sont affectés au dispositif de capture de jet (26),
**caractérisé en ce que**
- de manière contiguë au dispositif de capture de jet (26), d'un seul côté ou des deux côtés de celui-ci est prévue une fente d'évacuation (37) d'un dispositif d'évacuation (36) pour des parties de matériau séparées du matériau (25) en forme de plaque, et
- la largeur de fente de la fente d'évacuation (37) est formée de manière à être supérieure à une largeur d'ouverture de l'ouverture (31) du dispositif de capture de jet (26).

6. Dispositif selon la revendication 5, **caractérisé en ce que** la fente d'évacuation (37) est prévue entre le dispositif de capture de jet (26) et le dispositif de déviation (28) contigu à celui-ci.

7. Dispositif selon la revendication 5, **caractérisé en ce qu'**il est prévu un dispositif de capture de jet (26) comportant une ouverture lenticulaire (31), et que ladite au moins une fente d'évacuation (37) s'étend, au moins partiellement, de manière parallèle à l'ouverture (31) du dispositif de capture de jet (26), et que de préférence la largeur de fente de la fente d'évacuation (37) peut être ajustée à la taille des parties de matériau devant être évacuées.

8. Dispositif selon la revendication 5, **caractérisé en ce qu'**il est prévu un élément en forme de baguette ou une surface orienté(e) vers la fente d'évacuation (37) et contigu(ë) à l'ouverture (31) du dispositif de capture de jet (26) et pouvant être ouvert(e) dans le plan de la surface d'appui (16, 17), et que l'élément en forme de baguette ou la surface est de préférence réalisé(e) en plusieurs segments individuels, et que les segments individuels sont de préférence activables séparément.

9. Dispositif selon la revendication 5, **caractérisé en ce qu'**il est prévu au moins un élément-support (53) appuyant contre le dispositif de capture de jet (26) et s'étendant vers le dispositif de déviation (28) contigu à ce dernier et lequel prolonge, en direction du dispositif de capture de jet (26), les surfaces d'appui (16, 17) contiguës au dispositif de capture de jet (26) et limitées par le dispositif de déviation (28) par une surface de support (57) qui est interrompue par un évidement (54), et **en ce que** de préférence la longueur de l'évidement (54) le long de la surface de support (57) détermine la largeur de la fente d'évacuation (37), et que notamment plusieurs éléments-supports (53) disposés à une distance donnée les uns des autres sont contiguës au dispositif de capture de jet (26), et que les évidements (54) des éléments-supports (53) forment un canal, au moins les parties restantes situées entre les éléments-supports (53) pouvant être évacuées vers le dispositif d'évacuation (36), les éléments-supports (53) étant de préférence fixés sur une paroi de carter du dispositif de capture de jet (26) de manière à pouvoir être échangés.

10. Dispositif selon la revendication 5, **caractérisé en ce qu'**au-dessous de la fente d'évacuation (37) est prévu le dispositif d'évacuation (36) destiné à recevoir les parties de matériau tombant par la fente d'évacuation (37), lequel comprend de préférence un carter (41) en forme de bac dont les parties de paroi latérales (42) s'étendent au moins partiellement en direction de la surface d'appui (16, 17).

11. Dispositif selon la revendication 5, **caractérisé en ce qu'**une baguette d'appui (46) limitant l'ouverture (31) du dispositif de capture de jet (26) présente un bord d'entrée (48) formant la fente d'évacuation (37), et que de préférence la largeur de fente de la fente d'évacuation (37) peut être réglée au moins par la largeur de la baguette d'appui (46).

12. Dispositif selon la revendication 5, **caractérisé en ce qu'**un élément de fixation (59) reçoit au moins un élément d'appui (52) dont la surface forme une surface plane avec la face frontale (49) de la baguette d'appui (46) et forme un deuxième bord d'entrée (51) de la fente d'entrée (37), et que de préférence l'élément d'appui (52) est au moins formé en deux pièces et est réalisé de manière à être réglable quant à la grandeur de sa surface d'appui.

13. Dispositif selon la revendication 5, **caractérisé en ce que** la largeur de l'ouverture (31) du dispositif de capture de jet (26) est formée par des baguettes réalisées en un matériau à paroi mince, et que de préférence lesdites baguettes sont disposées en forme de toit pour former l'ouverture (31) dans le carter (33) du dispositif de capture de jet (26) et que leurs surfaces latérales inclinées favorisent une chute des parties de matériau dans la fente d'évacuation (37).

14. Dispositif selon la revendication 5, **caractérisé en ce qu'**il est prévu sur le carter (33) du dispositif de capture de jet (26) un dispositif de fermeture avec des éléments obturateurs individuels qui, dans une position de repos, obturent la fente d'évacuation (37) et qui, pour libérer la fente d'évacuation, peuvent être activés de manière individuelle ou ensemble, au moins partiellement, et que de préférence la longueur de la fente d'évacuation (37) est obturée au moins partiellement par au moins un élément d'obturation en forme de ruban.

15. Dispositif selon la revendication 5, **caractérisé en ce que** le dispositif d'évacuation (36) comprend un dispositif d'aspiration qui aspire de préférence des parties de matériau vers l'intérieur du carter (41) en forme de bac et/ou qu'il est prévu au-dessus de la fente d'évacuation (37) un dispositif de soufflage.
